# EUROPEAN PATENT SPECIFICATION

(11) **EP 0 708 039 B1**
(45) Date of publication and mention of the grant of the patent: **29.12.1997**
(21) Application number: 95203136.7
(22) Date of filing: 17.09.1993
(51) Int. Cl.: B65F 5/00, B65F 1/12, B65F 1/14

(54) **Device for collecting refuse, as well as removal and transport means therefor**
Müllsammelvorrichtung sowie Entleerungs- und Transportvorrichtung dafür
Dispositif de collecte, de ramassage et de transport d'ordures

(30) Priority: 17.09.1992 NL 9201615; 04.11.1992 NL 9201922
(43) Date of publication of application: 24.04.1996
(62) Divisional of application: 93922668.4
(73) Proprietor: RUTTE RECYCLING B.V., NL-1165 MK Halfweg (NL)
(72) Inventor: Rutte, Antonius, Nl-2132 TB Hoofddorp (NL)
(74) Representative: Metman, Karel Johannes

(56) References cited:
- EP-A- 0 480 326
- EP-A- 0 490 456
- DE-U- 9 004 988
- US-A- 3 485 408
- US-A- 3 613 915

## Description

The present invention relates to a device for collecting refuse, such as glass, paper, coarse refuse and the like, according to the preamble of claim 1, and to removal and transport means and system according to the preamble of claims 4 and 6 respectively.

In current devices for collecting refuse, one or more containers for different separated types of refuse are arranged on the sidewalk or, for example, on parking places, which is a "visual pollution" of the street image and occupies a lot of space. Furthermore, it is often difficult to fill the containers since the insert opening is arranged relatively high.

A device, means and system according to the preamble of claims 1, 4 and 6 resp. are known from US-A-3,613,915, which discloses a pressurized air connection for applying a vornado-type blast at the bottom of the container for blowing accumulated refuse out of the container and into an intake pipe of a garbage truck.

It is an object of the invention to improve the above prior art.

This object is attained by the invention in a device for collecting refuse, a removal and transport means and a refuse collection and removal system as defined in the appended claims.

Such a device is particularly suited for use with a removal and transport means for removing refuse from the refuse container, which removal and transport means comprises a loading space for receiving refuse and discharge means for transferring refuse from the refuse container to the loading space.

This combination of stationary refuse container and removal and transport means, which may be a special garbage truck, may lead to a stench- and dustfree removal of refuse, which is particularly favourable in case of perishable refuse. In particular when the refuse container and the removal and transport means are adapted for removing the refuse from the refuse container by pressing from below, a very large volume of the container may be chosen enabling a reduction of the removal frequency involving a substantial saving in costs. The removal and transport means may also comprise a cleaning unit for cleaning the interior of the refuse container after it being emptied.

For preventing stench inconveniences in devices intended to collect perishable refuse it is favourable if a stench lock is arranged below the insert opening. Such a stench lock may for example comprise revolving door means rotatable around a horizontal or vertical axis and operable automatically or by the person inserting refuse.

The refuse container may have a round, square or rectangular shape or may have any other cross section. A round cross section of the refuse container or outer casing, respectively, has the advantage that the part to be fixed in the ground may be constructed on the outer side as a soil auger having bore spirals enabling this part to be screwed into the soil and be screwed out of the soil for removal, if necessary, and when the device is in use the spirals prevent the device from being lifted, for example by groundwater pressure. The shape and area of the cross section may also be determined by the situation on site, such as the width of the pavement, the presence of cables and lines or the like. It is also possible to place several separate containers, for example for different types of refuse, within a common casing, conveniently having a rectangular section. The size and volume of the refuse containers and outer casings may be selected depending on the requirements.

To enhance the security with containers having a larger insert opening, for example for garbage sacks or coarse refuse, the invention proposes to close the insert opening with a lid which is equipped with a lock of which the coded key or code card can only be removed if the lid is locked. Of course, this measurement is only useful with refuse containers having a fixed number of users each having their own key. By forcing the user to lock the lid, the safety is improved because children are prevented from climbing into the refuse container through the unlocked insert opening. If somebody forgets to lock the lid, the responsible person may be discovered by means of the coded key. If such refuse containers should also be used by others than key holders, one or more smaller insert openings may be arranged next to the large insert opening, said smaller insert openings being too small to creep through.

The invention will hereafter be elucidated with reference to the drawing very schematically showing embodiments of the invention by way of example.

Fig. 1 is a schematic rear view of an embodiment of a device together with removal and transport means during emptying of the refuse container.

Fig. 2 is an enlarged vertical section of a nozzle for use with the removal and transport means of Fig. 1.

Fig. 3 is a plan view of the nozzle of Fig. 2.

Fig. 4 is a vertical section of an alternative of the device of Fig. 1 in accordance with the invention.

Fig. 5 shows in vertical section a further embodiment of a refuse container of the device according to the invention built stationary in the ground.

Fig. 6 is a view corresponding to that of Fig. 1 and showing a further embodiment of the device and removal and transport means according to the invention.

Fig. 7 shows a modification of the removal and transport means of Fig. 6.

Fig. 8 is a side view of the removal and transport means of Fig. 7.

Fig. 9 is a sectional view corresponding to that of Fig. 5 and showing a further embodiment of the invention.

Fig. 10 is a vertical section of a further embodiment of the invention.

The drawings show devices for collecting refuse, in particular separated household and industrial refuse, such as glass, paper, chemical waste, GFG, textile and other refuse which is removed separately, said devices being arranged mainly alongside public roads, in particular in dwelling environments.

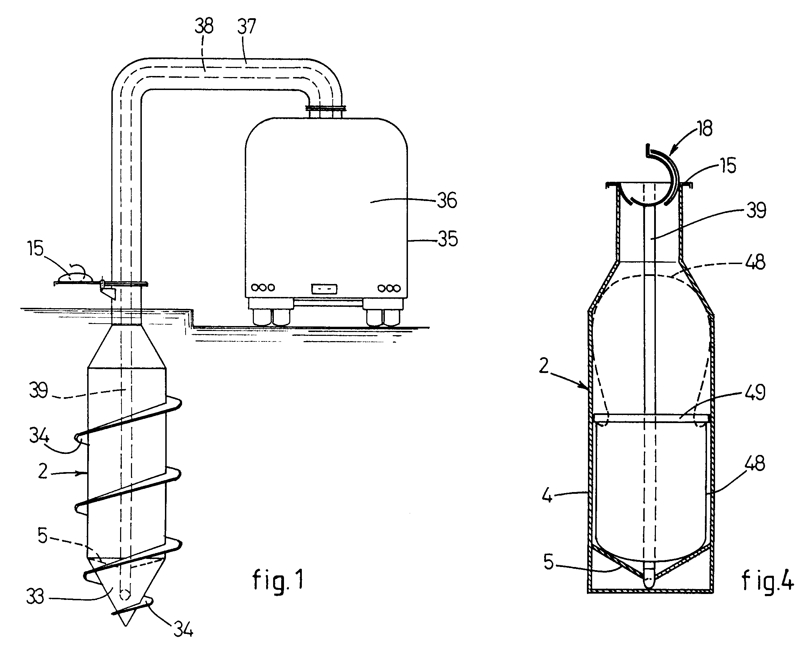

Fig. 1 shows an embodiment of a device in which the refuse container 2 is placed into the ground. For introducing the refuse container 2 into the ground, it includes in this case at the bottom side a tip 33, and the tip and the main portion of the side wall 4 of the refuse container 2 comprise a boring or cutting spiral 34 by means of which the refuse container 2 can be drilled into the ground so that it is not necessary to first dig a large hole in which the refuse container 2 can be lowered. For the sake of completeness it is noted that the container (or casing) could also be rammed or vibrated into the ground and in these cases it is possible to bring a container without a bottom into the ground, to remove the ground from the container and to make a bottom seal, for example of concrete. When the refuse container 2 is in use the boring spiral 34 also functions as means to prevent the refuse container 2 from being pressed upwardly, for example by the groundwater pressure. It is noted that this boring spiral 34 might also be used for the outer casing 1 of the preceding embodiments.

Since in this embodiment the refuse container 2 is fixed in the ground, a special method should be followed for emptying the refuse container 2. For this purpose, the invention provides a removal and transport means, such as the special garbage truck 35 comprising a closed loading space 36 communicating with a loading tube 37 which can be connected at the end facing away from the garbage truck 35 to the discharge opening of the refuse container 2, which discharge opening may be opened by the lid 15 which is rotated laterally away about a vertical axis. The garbage truck 35 further comprises an air pump (not shown) of which the suction side connects to the loading tube 37 of which the pressure side is in this case connected to a pressure line 38 being integrated in the loading tube 37 in this embodiment but which may also be separated from the loading tube 37 in other cases. The pressure line 38 is connectable to a delivery channel 39 formed in the refuse container 2 and extending from the upper side thereof near the discharge opening to a position near the bottom side of the refuse container 2 where the delivery channel 39 opens via a bend through the bottom wall 5 or side wall 4 into the interior of the refuse container 2.

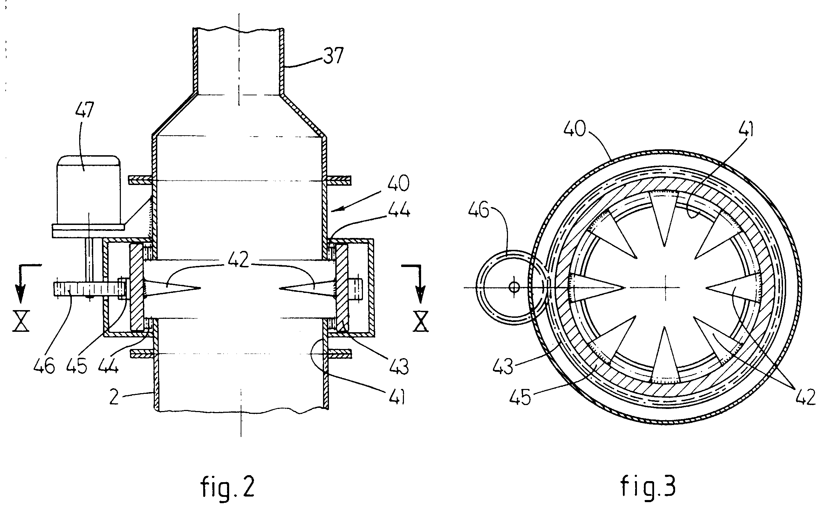

For preventing the loading tube 37 from becoming clogged and to enable a reduction of the diameter of the loading tube 37 it is equipped with a removable nozzle 40 as is shown in Fig. 2 and 3. This nozzle 40 includes means for cutting up at least the outer part of the refuse flowing into the loading tube 37. In this embodiment these means consist of a number of cutting teeth 42 projecting into the passage 41 of the nozzle 40 and standing radially inwardly from a ring 43 which is journalled within the nozzle 50 by means of bearings 44 and which comprises on the radial outer side a toothing 45 engaged with a gear wheel 46 of a drive motor 47 for driving the ring 43 with the cutting teeth 42. Instead of teeth one may also think of small movable hammers connected to the ring 43 and being equipped with counter weights to move inwardly under the influence of centrifugal forces.

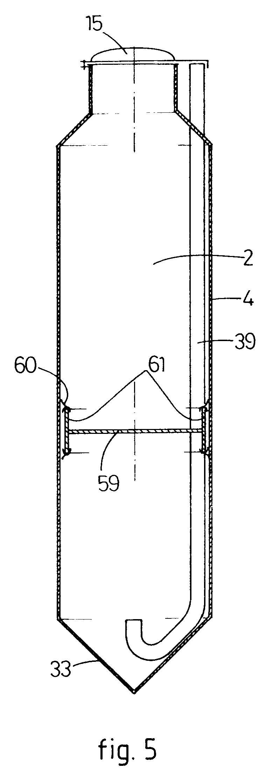

Fig. 4 shows a further feature of the device of Fig. 1 consisting of a sack 48 mounted in the interior of the refuse container 2 and attached with its opening edge to the inner side of the side wall 4 of the refuse container 2 by means of a clamping ring 49. The sack 48, made of very strong material, rests on the bottom 5 of the refuse container 2 in its position and may be extended upwardly beyond the discharge opening of the container. The purpose of the sack is to keep the delivery channel 39 of the refuse container 2 free of refuse, while it also limits the air loss when refuse is pressed out of the refuse container 2 by means of pressurized air delivered through the delivery channel 39 because the air cannot escape and the refuse is urged out of the refuse container 2 by the sack 48 being pressed upwardly by the compressed air up to the discharge opening.

The refuse container according to Fig. 1 and 4 may possibly be disinfected after it has been emptied if the garbage truck 35 comprises a steam cleaner conducting steam through the loading tube 37 (Fig. 1 and 4) or through the pressure line 38 and the delivery channel 39 (Fig. 1) into the refuse container 2. This leads to a very hygienic system in stench and dust and with each emptying operation the refuse container may also be disinfected.

It is also shown in Fig. 4 that the stench lock 18 and the lid 15 thereof comprise a curved sluice door which is pivotable about a horizontal axis.

Instead of or in addition to a stench lock, the upper side of the stationary refuse container 2 may comprise a fan or other exhaust means connecting to the street sewerage or a house connection, respectively, by means of an air discharge line containing an air valve. In this way smelling air is discharged through the sewerage. The driving means of the fan or the exhaust means may be supplied by solar energy or my be connected to the main supply of the street lights, wherein the fan is switched on when the insert opening is released and is switched off again after it is closed off by a lid. This switching action of the fan may be done automatically by means of a switch.

Fig. 5 shows a further embodiment of in particular the stationary refuse container 2 of Fig. 4, in which the refuse container 2 does not comprise a sack but a reciprocating bottom 59. This bottom 59 is sealed against the side wall of the refuse container 2 by means of seals 60 or in another way so that refuse cannot pass downwardly beyond the movable bottom 59. The bottom 59 further has an upright edge 61 also preventing liquid from escaping downwardly. The movable bottom 59 is intended to urge the refuse collected in the refuse container 2 outwardly when the loading tube 37 of the garbage truck is connected thereto. The upward movement of the bottom 59 is effected by means of compressed air supplied from the garbage truck 35 through the delivery channel 39 to the space below the bottom 59.

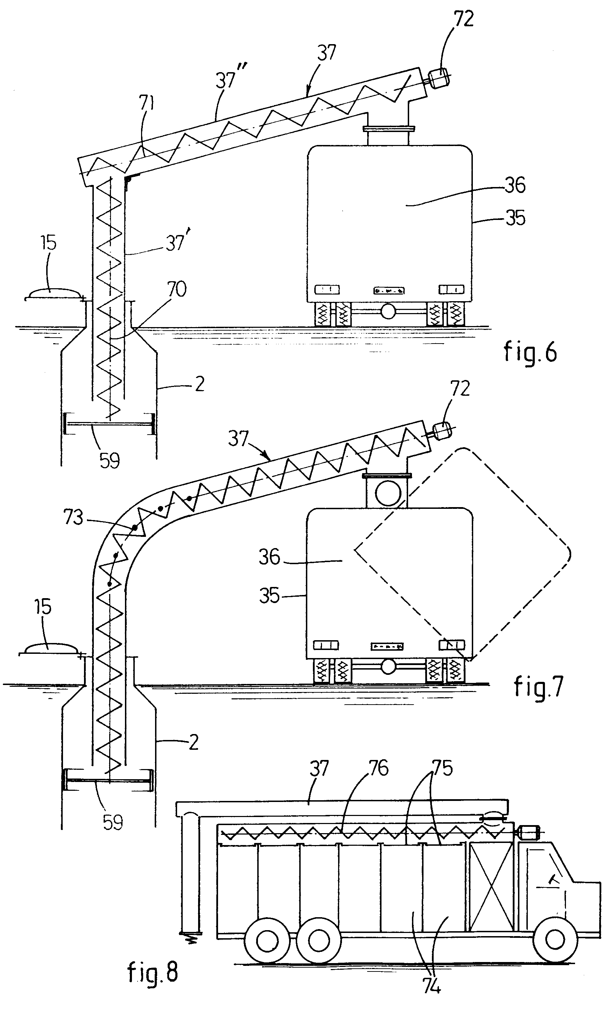

Fig. 6 shows that discharging waste from the container 2 to the loading space 36 of the garbage truck 35 cannot only be obtained by vacuum, but the loading tube 37 may also comprise one or more screw conveyors. In the embodiment of Fig. 7 the loading tube 37 includes a first vertical portion 37' containing a first screw conveyor 70 and a second horizontal or inclined portion 37'' containing a second screw conveyor 71, both screw conveyors 70 and 71 interconnecting such that the refuse of the first screw conveyor 70 can be delivered to the second screw conveyor 71. Both screw conveyors my have a separate drive motor or may be coupled together and driven by a single motor 72. When the loading tube 37 is connected to the container 2, the first screw conveyor 70 is introduced into the container 2 so that almost all the refuse may be removed from the container.

Fig. 7 shows that instead of two tube portions 37' and 37'' containing two screw conveyors 70 and 71, one may also use a single curved loading tube 37 in which a single articulated screw conveyor 73 is received extending through the whole loading tube 37. This screw conveyor my also be slid out the loading tube, for example by an hydraulic cylinder provided at the discharge end of the conveyor, in order to be lowered into the refuse container permitting said screw to empty the container.

Fig. 8 illustrates that the loading space 36 of the garbage truck 35 may comprise a plurality of separate compartments 75 arranged one behind the other and closable by covers 74. Above the compartments 74 extends a distribution screw 76 adapted to transport the refuse supplied through the loading tube 37 at that time to the corresponding open compartment 74. In this manner, the garbage truck 35 is suited for different types of refuse so that containers for different types of refuses may be emptied by one and the same truck which leads to a reduction of traffic movements by garbage trucks. The compartments 74 may for example be emptied by tilting the loading container permitting the refuse to drop out of the respective compartiments 74 through a side door. If there are more compartments then refuse flows it is possible that the required number of compartments may be used for a particular type of refuse depending on the supplied amount. This enables an optimum use of the garbage truck with respect to its capacity.

To further reduce the number of traffic movements of garbage trucks it is favourable to equip the refuse containers with a warning system with which, for example via the thelephone network, can be reported to a telephone exchange or switch board if a refuse container is almost filled and should be emptied. One or more sensors may be built in the refuse container for this purpose. This is particularly useful if the underground refuse containers are very large and hence no garbage truck with compartments are necessary since the garbage truck is completely filled by emptying only a few underground containers and consequently the garbage trucks may discharge the particular refuse directly to a processing location intended for this refuse without an additional transfer.

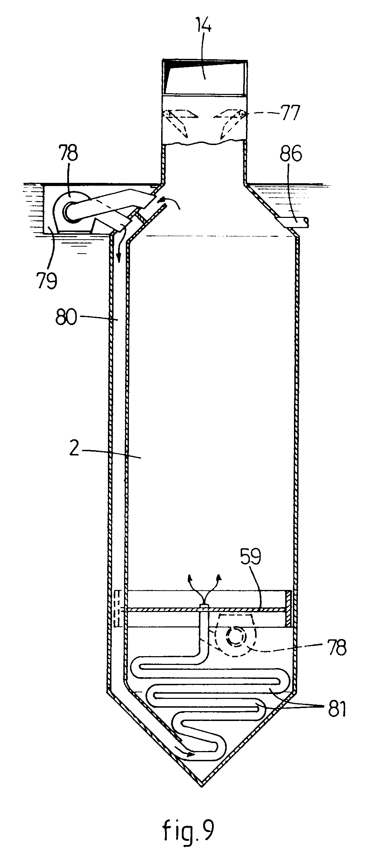

Fig. 9 illustrates an embodiment of the device according to the invention which is made suitable for composting or precomposting refuse dropped in the refuse container 2, such as GFG or other compostable refuse. This composting or precomposting provides collecting savings as a result of the reduction in volume involved in composting, while also the processing costs can be reduced. The invention is based on directly composting the refuse in the refuse container 2. Depending on the manner in which the refuse is supplied, for example without covering, in compostable bags or in closed plasic bags, there will be provided a cut up means 77 on the top side directly under the insert opening 14 consisisting for example of movable sharp cutting means. They can cut open bags as a result of the weight thereof, or in case of a driven cut up means it can automatically be actuated after the lid of the insert opening 14 is closed.

The device according to the invention of Fig. 9 comprises at least one fan 78 for introducing oxygen into the refuse container 2, in this case by means of air. The fan 78 may be arranged in different positions. The fan 78 is accommodated in a pit 79 in the ground near the top side of the refuse container 2 and on the outer side thereof, the fan 78 being adapted to blow air via a channel 80 and a hose 81 through the movable bottom 59 into the interior of the refuse container 2. The fan 78 also sucks in air from the upper portion of the refuse container 2 so that the air in the refuse container 2 may circulate and fresh air may arrive in the container by opening the insert opening 14. The fan 78 could also be mounted below the bottom 59 as is indicated with a dash line in Fig. 9, the air is then evacuated by the fan through the channel 80 and the hose 81. It is also possible to provide more fans or other oxygen supply means in or on the refuse container 2.

In the embodiment of Fig. 9, the refuse container 2 should always be used in combination with other refuse containers because composting mainly takes place if the whole refuse container 2 is filled. At that time another container serves to collect refuse, while the filled container is then used for composting the contents thereof.

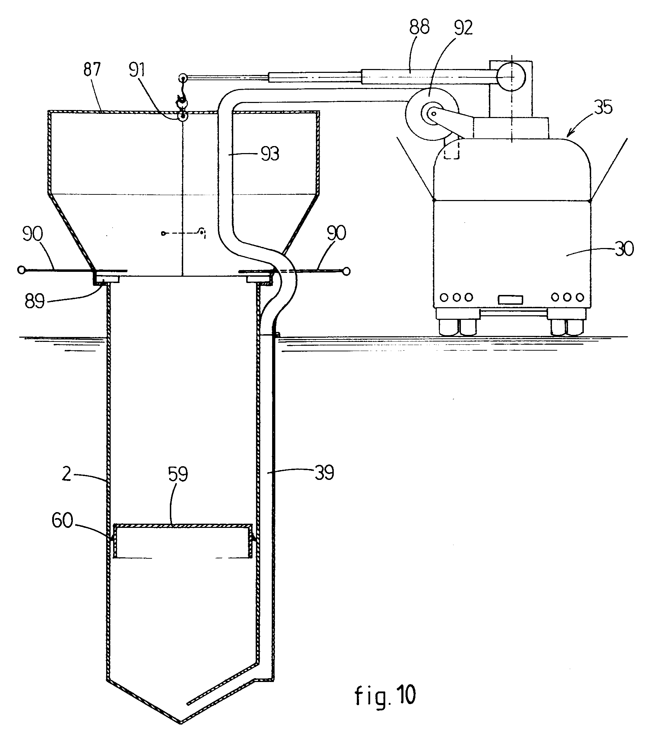

Fig. 10 shows a further embodiment having a number of particular aspects. The movable bottom 59 in the refuse container 2 is now, contrary to Fig. 5, provided with a flat upper side in orde to allow liquid from the refuse to flow past the seal 60 and to arrive below the bottom 59. This prevents decay of the refuse and consequently stench inconvenience. The liquid collected under the bottom 59 may be sucked away through the delivery channel 39 if the container 2 is emptied. When there is an overpressure in the container 2 after the refuse has been pressed out, the liquid will rise automatically in the delivery channel if the pressure in front of the delivery channel 39 is removed. The seal 60 only works in upward direction when the removable bottom 59 is pressed up by compressed air. It is further shown in this Fig. that the container has a constant cross section over the total height, which promotes discharge of the refuse.

The transfer of refuse from the interior of the container 2 to the loading space 36 of the garbage truck 35 occurs by means of a transfer bunker 87 in this embodiment. It may be manipulated by a crane 88 (or a lateral tilting device) of the garbage truck 35 and may be disposed on the discharge opening of the refuse container 2. Clamps (not shown) may fix the transfer bunker 87 on a peripheral flange 89 also serving as stop for the movable bottom 59. The bottom side of the transfer bunker 87 may be opened and closed by means of sliding doors 90 or the like. An air hose 93 including a reel 92 for compressed air may be connected to the delivery channel 39 of the container 2. Because the refuse is force-pressed from the container 2 into the transfer bunker 87 the volume of the refuse is reduced and hence the volume of the transfer bunker 87 may be substantially less than that of the container 2 while it is still possible to transfer all the refus in one charge to the loading space 36 of the garbage truck 35. To further compress the refuse in the transfer bunker a movable compressing plate may be arranged therein which reciprocates when the transfer bunker is filled. For emptying the transfer bunker 87 above the loading space 36 the bunker is divided vertically and the parts are connected at the upper side by a pivot 91. Of course, the transfer bunker may be shaped and constructed in many other ways. For the sake of clarity it is noted that container 2 and garbage truck 35 are not drawn on the same scale.

In this and other embodiments it is possible to make the overground part of the refuse container with a reduced diameter and to construct the overground part as a removable part, so that this overground part may be removed when the container should be emptied. In that case the refuse may be pushed out the underground part which has a constant diameter. The stop of the movable bottom or piston defining the upper position thereof may consist of a cable or chain connected between the stationary and movable bottom of the container.

The invention is not restricted to the embodiments shown in the drawing and described herein before, which may be varied in different manners within the scope of the invention. There may for instance be provided a device for opening the lid of the insert openings of the refuse container by foot creating as it were a pedal bin. Lids for insert openings of the refuse containers not closing as a result of their own weight may be provided with a reset means, such as a spring, being tensioned when the lid is opened and thereby obtaining energy for closing.

## Claims

1. Device for collecting refuse, comprising a refuse container (2) having an insert opening (14) and a sealable discharge opening for emptying the refuse container in or near the upper wall, said refuse container (2), in operation, being arranged partially underground and comprising means for removing refuse from the container, said means including a fluid delivery channel (39) having an upper and lower end, the upper end being equipped to receive a pressurized fluid and the lower end opening into the refuse container (2) near the bottom thereof, **characterized** in that the means for removing refuse from the container includes movable bottom means (48; 59) within the container (2), said movable bottom means being provided with sealing means (49; 60), and the lower end of the fluid delivery channel (39) opening in a space below the movable bottom means (48; 59) to act directly thereon to cause an upward movement of the bottom means, stop means (49; 89) being provided to restrict the upward movement of the movable bottom means.

2. Device according to claim 1, wherein the movable bottom means (59) has a flat upper side and the sealing means (60) thereof is adapted to allow liquid from the refuse to flow downwardly past the sealing means (60).

3. Device according to claim 2, wherein the refuse container (2) has a constant inner cross section up to the discharge opening.

4. Removal and transport means (35) for removing refuse from a refuse container (2) as defined in claim 1, comprising a loading space (36) for receiving refuse, and transfer means for transferring refuse from the refuse container to the loading space, **characterized** in that the transfer means includes a separate transfer bunker (87) having a closable opening at its bottom side and which can be placed on the discharge opening of the refuse container (2) for taking in refuse and which has closure means (90) to close said opening of the bunker (87) during transfer to the loading space (36) and to open the bunker (87) into the loading space (36).

5. Removal and transport means according to claim 4, comprising a fluid pump (92) having a pressure line (38; 93) which is connectable to a fluid delivery channel (39) of the refuse container (2) to remove refuse from said container.

6. Refuse collection and removal system comprising a plurality of refuse containers (2) and a removal and transport means (35), each refuse container (2) having an insert opening (14) and a sealable discharge opening for emptying the refuse container in or near the upper wall, said refuse container (2), in operation, being arranged partially underground and comprising means for removing refuse from the container, said means including a fluid delivery channel (39) having an upper and lower end, the upper end being equipped to receive a pressurized fluid and the lower end opening into the refuse container (2) near the bottom thereof, said removal and transport means (35) including a loading space (36) for receiving refuse, delivery means (92) for fluid for connection to the delivery channel (39) of each refuse container (2), and transfer means (37, 87) connectable to the discharge opening of the refuse container (2) to transfer the refuse from the container (2) to the loading space (36) of the removal and transport means (35), **characterized** in that the means for removing refuse from the container includes movable bottom means (48; 59) within the container (2), the lower end of the fluid delivery channel (39) opening in a space below the movable bottom means (48; 59) to act directly thereon to cause an upward movement of the bottom, and there are further provided means (49; 89) to restrict the upward movement of the movable bottom means (48; 59).

7. System according to claim 6, wherein the movable bottom means (59) is provided with sealing means (60) around its circumference.

8. System according to one of claims 6 and 7, wherein the transfer means is a tube (37) carried by the removal and transport means and connectable to the discharge opening of the refuse container (2).

9. Systems according to claim 8, wherein the tube (37) comprises means (70; 71; 73) to transfer refuse from the discharge opening of the container to the loading space (36) of the garbage truck.

## Patentansprüche

1. Vorrichtung zum Sammeln von Müll, umfassend einen Müllbehälter (2) mit einer Einführöffnung (14) und einer abdichtbaren Entladeöffnung zum Entleeren des Müllbehälters in oder nahe an der oberen Wand, wobei der Müllbehälter (2) beim Betrieb teilweise in den Erdboden eingebettet ist und ein Mittel zum Entleeren von Müll aus dem Behälter aufweist, wobei das Mittel einen Fluideinführungskanal (39) mit einem oberen und einem unteren Ende aufweist, wobei das obere Ende so eingerichtet ist, daß es ein unter Druck stehendes Fluid aufnehmen kann, und sich das untere Ende in den Müllbehälter (2) nahe am Boden desselben öffnet, dadurch gekennzeichnet, daß das Mittel zum Entleeren von Müll aus dem Behälter bewegliche Bodenmittel (48; 59) in dem Behälter (2) umfaßt, wobei die beweglichen Bodenmittel mit Abdichtmitteln (49; 60) versehen sind und sich das untere Ende des Fluideinführungskanals (39) in einen Raum unter den beweglichen Bodenmitteln (48; 59) öffnet, um direkt auf diese einzuwirken, um eine Bewegung der Bodenmittel nach oben zu bewirken, wobei Anschlagmittel (49; 89) vorhanden sind, um die Bewegung der beweglichen Bodenmittel nach oben zu beschränken.

2. Vorrichtung nach Anspruch 1, wobei das bewegliche Bodenmittel (59) eine ebene Oberseite aufweist und das Ahdichtmittel (60) desselben so eingerichtet ist, daß Flüssigkeit aus dem Müll an dem Abdichtmittel (60) vorbei nach unten fließen kann.

3. Vorrichtung nach Anspruch 2, wobei der Müllbehälter (2) bis zu der Entladeöffnung einen konstanten Innenquerschnitt besitzt.

4. Entleerungs- und Transportmittel (35) zum Entleeren von Müll aus einem Müllbehälter (2) nach Anspruch 1, umfassend einen Laderaum (36) zur Aufnahme von Müll und ein Beförderungsmittel zum Befördern von Müll aus dem Müllbehälter in den Laderaum, dadurch gekennzeichnet, daß das Beförderungsmittel einen separaten Beförderungsspeicher (87) mit einer verschließbaren Öffnung an seiner Bodenseite aufweist, der auf die Entladeöffnung des Müllbehälters (2) gesetzt werden kann, um Müll aufzunehmen, und ein Schließmittel (90) aufweist, um die Öffnung des Speichers (87) beim Befördern in den Laderaum (36) zu schließen und den Speicher (87) in den Laderaum (36) zu öffnen.

5. Entleerungs- und Transportmittel nach Anspruch 4, umfassend eine Fluidpumpe (92) mit einer Druckleitung (38; 93), die an einen Fluideinführungskanal (39) des Müllbehälters (2) anschließbar ist, um Müll aus dem Behälter zu entleeren.

6. Müllsammel- und Entleerungssystem, umfassend eine Mehrzahl von Müllbehältern (2) und ein Entleerungs- und Transportmittel (35), wobei jeder Müllbehälter (2) eine Einführöffnung (14) und eine abdichtbare Entladeöffnung zum Entleeren des Müllbehälters in oder nahe an der oberen Wand umfaßt, wobei der Müllbehälter (2) beim Betrieb teilweise in den Erdboden eingebettet ist und ein Mittel zum Entleeren von Müll aus dem Behälter aufweist, wobei das Mittel einen Fluideinführungskanal (39) mit einem oberen und einem unteren Ende aufweist, wobei das obere Ende so eingerichtet ist, daß es ein unter Druck stehendes Fluid aufnehmen kann, und sich das untere Ende in den Müllbehälter (2) nahe am Boden desselben öffnet, wobei das Entleerungs- und Transportmittel (35) einen Laderaum (36) zur Aufnahme von Müll, ein Zuführungsmittel (92) für ein Fluid zum Anschließen an den Einführungskanal (39) jedes Müllbehälters (2) und Beförderungsmittel (37, 87) aufweist, die an die Entladeöffnung des Müllbehälters (2) anschließbar sind, um den Müll aus dem Behälter (2) in den Laderaum (36) des Entleerungs- und Transportmittels (35) zu befördern, dadurch gekennzeichnet, daß das Mittel zum Entleeren von Müll aus dem Behälter bewegliche Bodenmittel (48; 59) in dem Behälter (2) umfaßt, wobei sich das untere Ende des Fluideinführungskanals (39) in einen Raum unter den beweglichen Bodenmitteln (48; 59) öffnet, um direkt auf diese einzuwirken, um eine Bewegung des Bodens nach oben zu bewirken, und daß ferner Mittel (49; 89) vorhanden sind, um die Bewegung der beweglichen Bodenmittel (48; 59) nach oben zu beschränken.

7. System nach Anspruch 6, wobei das bewegliche Bodenmittel (59) um seinen Umfang herum mit einem Abdichtmittel (60) versehen ist.

8. System nach einem der Ansprüche 6 und 7, wobei das Beförderungsmittel ein Rohr (37) ist, das von dem Entleerungs- und Transportmittel gehalten wird und an die Entladeöffnung des Müllbehälters (2) anschließbar ist.

9. Systeme nach Anspruch 8, wobei das Rohr (37) Mittel (70; 71; 73) umfaßt, um Müll von der Entladeöffnung des Behälters in den Laderaum (36) des Müllfahrzeugs zu befördern.

## Revendications

1. Dispositif de collecte d'ordures, comprenant un conteneur à ordures (2) ayant une ouverture d'insertion (14) et une ouverture d'évacuation qui peut être hermétiquement fermée et qui est destinée à vider le conteneur à ordures, dans la paroi supérieure ou à son voisinage, ledit conteneur à ordures (2), en utilisation, étant disposé de façon partiellement souterraine et comprenant des moyens pour retirer les ordures du conteneur, lesdits moyens incluant un canal d'amenée de fluide (39) comportant une extrémité supérieure et inférieure, l'extrémité supérieure étant équipée pour recevoir un fluide sous pression, et l'extrémité inférieure débouchant dans le conteneur à ordures (2) à proximité de sa partie inférieure, **caractérisé** en ce que les moyens pour retirer les ordures du conteneur comprennent des moyens mobiles de partie inférieure (48 ; 59) à l'intérieur du conteneur (2), lesdits moyens mobiles de partie inférieure comportant des moyens d'étanchéité (49 ; 60), et l'extrémité inférieure du canal d'amenée de fluide (39) débouchant dans un espace situé au-dessous des moyens mobiles de partie inférieure (48 ; 59) afin d'agir directement sur ces moyens de manière à provoquer un déplacement vers le haut des moyens de partie inférieure, des moyens d'arrêt (49 ; 89) étant prévus pour limiter le déplacement vers le haut des moyens mobiles de partie inférieure.

2. Dispositif selon la revendication 1, dans lequel les moyens mobiles de partie inférieure (59) présentent un côté supérieur plat et leurs moyens d'étanchéité (60) sont aptes à laisser s'écouler vers le bas le liquide provenant des ordures, au-delà des moyens d'étanchéité (60).

3. Dispositif selon la revendication 2, dans lequel le conteneur à ordures (2), jusqu'à l'ouverture d'évacuation, possède une section droite intérieure constante.

4. Moyens de retrait et de transport (35) destinés à retirer les ordures d'un conteneur à ordures (2) tel que défini selon la revendication 1, comprenant un espace de chargement (36) pour recevoir les ordures, et des moyens de transfert pour transférer les ordures du conteneur à ordures à l'espace de chargement, **caractérisé** en ce que les moyens de transfert comprennent un silo de transfert séparé (87) comportant une ouverture pouvant être fermée à son côté inférieur et qui peut être placé sur l'ouverture d'évacuation du conteneur à ordures (2) de manière à recueillir les ordures, et qui possède des moyens de fermeture (90) permettant de fermer ladite fermeture du silo (87) au cours du transfert à l'espace de chargement (36) et d'ouvrir le silo (87) dans l'espace de chargement (36).

5. Moyens de retrait et de transport selon la revendication 4, comprenant une pompe à fluide (92) munie d'une ligne sous pression (38 ; 93) qui peut être raccordée à un canal d'amenée de fluide (39) du conteneur à ordures (2) de manière à retirer les ordures dudit conteneur.

6. Système de collecte et de retrait d'ordures, comprenant une pluralité de conteneurs à ordures (2) et des moyens de retrait et de transport (35), chaque conteneur à ordures (2) ayant une ouverture d'insertion (14) et une ouverture d'évacuation qui peut être hermétiquement fermée et qui est destinée à vider le conteneur à ordures, dans la paroi supérieure ou à son voisinage, ledit conteneur à ordures (2), en utilisation, étant disposé de façon partiellement souterraine et comprenant des moyens pour retirer les ordures du conteneur, lesdits moyens incluant un canal d'amenée de fluide (39) comportant une extrémité supérieure et inférieure, l'extrémité supérieure étant équipée pour recevoir un fluide sous pression, et l'extrémité inférieure débouchant dans le conteneur à ordures (2) à proximité de sa partie inférieure, lesdits moyens de retrait et de transport (35) comprenant un espace de chargement (36) pour recevoir les ordures, des moyens d'amenée de fluide (92) destinés à être raccordés au canal d'amenée (39) de chaque conteneur à ordures (2), et des moyens de transfert (37, 87) pouvant être raccordés à l'ouverture d'évacuation du conteneur à ordures (2) pour transférer les ordures du conteneur (2) à l'espace de chargement (36) des moyens de retrait et de transport (35), **caractérisé** en ce que les moyens pour retirer les ordures du conteneur comprennent des moyens mobiles de partie inférieure (48 ; 59) à l'intérieur du conteneur (2), l'extrémité inférieure du canal d'amenée de fluide (39) débouchant dans un espace situé au-dessous des moyens mobiles de partie inférieure (48 ; 59) afin d'agir directement sur ces moyens de manière à provoquer un déplacement vers le haut de la partie inférieure, des moyens (49 ; 89) étant, en outre, prévus pour limiter le déplacement vers le haut des moyens mobiles de partie inférieure (48 ; 59).

7. Système selon la revendication 6, dans lequel les moyens mobiles de partie inférieure (59) comportent des moyens d'étanchéité (49 ; 60) le long de leur circonférence.

8. Système selon l'une des revendications 6 et 7, dans lequel les moyens de transfert sont un tube (37) supporté par les moyens de retrait et de transport et qui peut être raccordé à l'ouverture d'évacuation du conteneur à ordures (2)

9. Système selon la revendication 8, dans lequel le tube (37) comprend des moyens (70 ; 71 ; 73) destinés à transférer les ordures de l'ouverture d'évacuation du conteneur à l'espace de chargement (36) du camion à ordures.
